# EUROPÄISCHE PATENTANMELDUNG

(11) **EP 1 508 607 A1**
(43) Veröffentlichungstag der Anmeldung: **23.02.2005**
(21) Anmeldenummer: 04405520.0
(22) Anmeldetag: 19.08.2004
(51) Int. Cl.: C10B 53/02, C10B 49/04

(54) **Reaktor für die Herstellung von Holzkohle**

(30) Priorität: 20.08.2003 CH 14172003
(71) Anmelder: Henzi, Bruno, 2558 Aegerten (CH)
(72) Erfinder: Henzi, Bruno, 2558 Aegerten (CH)
(74) Vertreter: AMMANN PATENTANWAELTE AG BERN

(57) **Zusammenfassung**

Ein Reaktor (100) zur Erzeugung von Holzkohle in stehende Ausführung weist im Oberteil (2) eine Beschickungseinrichtung mit einer Schleuse (5) und einen anschliessenden Reaktorraum auf, der sich nach unten erweitert, um Staus vom Vorrücken des Kohlungsgutes zu vermeiden. Oben im Unterteil (1) schliess sich die Kohlungszone (106) an. Sie ist durch ein Kohlungsinntenteil (4) ausgezeichnet, das über seinen Umfang verteilt Durchlässe für Luft aufweist. Über verschliessbare oder regelbare Öffnungen (10) in der Reaktorwand und den Freiraum um das Kohlungsinnenteil (4) wird Luft umfangmässig gleichmässig verteilt in der Kohlungszone in das Kohlungsmaterial eingeleitet. Unterhalb der Kohlungszone (106) schliesst sich ein Austragschacht mit Schikanen (16) und ein Transportsystem (8) an. Der Reaktor (100) ist insgesamt im wesentlichen luftdicht abgeschlossen, so dass Luft im wesentlichen nur kontrolliert durch die Luftzufuhreinrichtung (10) eintreten kann.

## Beschreibung

Die vorliegende Erfindung bezieht sich auf einen Reaktor für die Herstellung von Holzkohle gemäss Oberbegriff des Anspruchs 1

Holzkohle wird durch unvollständige Verbrennung von Holzmaterial hergestellt, u. a. Holzscheiten, Spänen. Neben aufwendig zu errichtenden Meilern wurden auch Reaktoren entwickelt, um die Holzkohleproduktion effizienter zu gestalten. Aus der GB-128 791, GB-1 186 und US-A-2001/0017002 sind derartige Reaktoren bekannt. Gemäss GB-128 791 und US-2001/0017002 wird jedoch das Holz, das verkohlt werden soll, in Retorten bzw. Kammern gegeben, die von aussen erhitzt werden.

Bei der GB-128,791 tritt das erzeugte Gas in die Feuerkammer um die Verkohlungskammer herum aus und wird verbrannt, um Wärme für die Holzkohleerzeugung zu erzeugen. Bei der US-A-2001/0017002 wird das Gas gesammelt, kondensierbare Bestandteile werden abgetrennt und das Gas in die Feuerkammer zurückgeleitet, um zur Wärmeerzeugung beizutragen.

Die GB-1 186 beschreibt einen transportablen, im wesentlichen zylinderförmigen Reaktor. Er wird mit Holz gefüllt und die Verbrennung eingeleitet, wobei durch Öffnen oder Verschliessen von Öffnungen die korrekten Brennbedingungen für die Holzkohlebildung eingestellt werden können. Nach Abschluss des Verkohlungsprozesses wird der Reaktor entleert und wieder beschickt.

Diese Vorrichtungen sind entweder relativ aufwendig durch die externe Heizvorrichtung oder nur diskontinuierlich betreibbar.

Es ist daher eine Aufgabe de Erfindung, einen Reaktor anzugeben, der eine kontinuierliche Holzkohleerzeugung gestattet.

Ein solcher Reaktor ist im Anspruch 1 angegeben. Die weiteren Ansprüche geben bevorzugte Ausführungsformen an.

Es handelt sich im wesentlichen um einen stehenden Reaktor, der in einem Durchlaufverfahren die Herstellung von Holzkohle gestattet, in dem die Beschickung mit dem Gut (Holz) wie auch der Austrag des verkohlten Produktes kontinuierlich erfolgt.

Ein weiterer Vorteil dieses Reaktortyps ist die verbesserte Energieausnutzung. Zur Herstellung von Holzkohle wird keine Fremdenergie benötigt, und durch die innere Verbrennung wirkt die Hitze direkt auf das Gut ein. Lediglich für Hilfs- und Steueraggregate wie Rauchgasabzug und die elektrischen Komponenten zur Steuerung und Regelung benötigt dieses System eine geringe elektrische Leistung.

Die Prozesswärme, die für die Verkohlung nötig ist, wird alleine über das Einfüllgut erzeugt. Damit unterscheidet sich dieser Reaktortyp von anderen Durchlaufverfahren, in denen vorgeheizte Luft als Wärmequelle dient.

In einer bevorzugten Ausführungsform ist die Gewinnung von zusätzlichen Energieträgern wie Holzöl, Schwachgas und Prozesswärme möglich, die während des Prozesses anfallen.

Damit wird ein höchstmöglicher Nutzen bei einem sehr guten Wirkungsgrad erzielt.

Insbesondere ist ein bevorzugte Ausführungsform wie folgt definiert: Der stehende Holzkohlenreaktor mit der Befüllung oben und anschliessendem Schleusensystem besteht im wesentlichen aus dem Oberteil, dem Unterteil mit dem eingehängten Korb in der Verkohlungszone mit der gleichzeitigen Lufteintrittzone, die durch eine Vielzahl von Luftlöchern gebildet wird; den Türen, die luftdicht schliessen, einerseits zur Sichtkontrolle und anderseits zum Anheizen des Verkohlungsguts; am Ende des Unterteils (1) der Fördereinrichtung und dem luftdicht verschliessbaren Aufnahmebehälter; sowie dem Rauchgasaustritt unterhalb des Schleusensystems mit der anschliessenden Holzölseparation; wobei
- das Oberteil mit der zunehmenden Öffnung nach unten sowie dem Abweiserblech zur besseren Trennung vom Rauchgas zum Befüllungsgut dient,
- die Verbindung vom Oberteil zum Unterteil kraft- oder formschlüssig erfolgen kann,
- der gelochte Korb mit der Verjüngung der unteren Öffnung mit dem Ziel einer besseren Luftverteilung auf das Verkohlungsgut ausgeführt ist,
- kaskadenförmigen Gleitblechstufen mit der Absicht, ein Absacken in der Mitte des Unterteils (1) zu verhindern sowie den Auflagedruck aufs Fördersystem (8) zu minimieren, vorhanden sind,
- die Querschnittsform des Oberteils und Unterteils rund, rechteckig oder eine andere Form haben kann,
- das Fördermittel für das Austrittsgut ein Schubkratzboden, Spiralförderer, Schneckenförderer oder eine Zellradschleuse sein kann,
- das gesamte System bis auf die Lufteintrittsbohrung luftdicht abgeschlossen ist,
- die Prozessführung in der Abhängigkeit von gedrosselter Zuluft, Rauchgasmenge, Eintritts- und Austrittsmenge, Temperatur- und Druckgrössen durch eine Handbedienung oder elektronisch geführt werden kann,
- die Rauchgaszusammensetzung überwacht werden kann und
- der Lufteintritt auch als vorverdichtete Luft eingedüst werden kann.

Die Erfindung soll weiter an einem Ausführungsbeispiel unter Bezugnahme auf Figuren erläutert werden. Es zeigen:
- Fig. 1: Seitenansicht eines Reaktor mit Teilschnitt durch Brennzone;
- Fig. 2: einen vergrösserten Teilschnitt gemäss II in Fig. 1;
- Fig. 3: einen Teilschnitt durch die Brennzone in modifizierter Ausführung gemäss III-III in Fig. 4; und
- Fig. 4: eine Schnitt gemäss IV-IV in Fig. 3.

Der Holzkohlenreaktor 100 steht aufrecht, d.h. die Befüllung erfolgt von oben und der Austrag ist am unteren Ende, und umfasst ein Unterteil 1 und ein Oberteil 2.

Oben am Oberteil 2 befindet sich die Schleuse 5, an deren Eintritt und Austritt jeweils ein Schieber 13A, 13B angeordnet ist, und auf der Schleuse 5, d. h. auf dem Eintrittsschieber 13A, das Einfüllteil 6. Das Oberteil 2 ist leicht konisch ausgeführt mit der grösseren Öffnung nach unten, an der sich die trennbare Flanschverbindung 101 zum Unterteil 1 befindet . Zum besseren Trennen des Einfüllgutes vom Rauchgasaustritt 102 dient ein Abweiserblech 15 das auf einem Stab 104 zur Stabilisierung aufliegt. Die Form des Oberteils 2, die sich nach unten erweitert, vermeidet insbesondere Staus des Kohlungsguts beim Nachrutschen nach unten.

Das Kohlungsgut wird gemäss Pfeil 20 in den Einfüllteil gegeben, wobei der obere Schieber 13A geöffnet ist, so dass sich das Gut in der Schleuse 5 sammelt. Der obere Schieber 13A wird geschlossen und danach der untere Schieber 13B geöffnet, um das Gut in den Reaktor 100 hineinfallen zu lassen. Durch die Schleuse 5 wird vermieden, dass bei dem Einfüllvorgang zu grosse Mengen Frischluft in den Reaktor 100 gelangen.

In der eigentlichen Kohlungszone 106 im Unterteil 1 sind in der Aussenwand ein Vielzahl von drosselbaren Lufteintrittslöchern 10 und luftdicht abschliessbaren Türen 9 vorhanden. Die Türen 9 dienen einerseits Kontrollzwecken und anderseits dem Anfeuern. Die Lufteintrittslöcher 10 sind entweder einzeln, gruppenweise, oder insgesamt mit Schiebern oder ähnlichen Vorrichtungen regelbar und damit die Luftzufuhr drosselbar. Die Drosselung der Luft erfolgt durch von Hand oder automatisch. Jeweils drei der Löcher 10 ist eine Messöffnung 11 zugeordnet, durch die insbesondere eine Temperaturmessung und damit eine Kontrolle des Brennprozesses möglich ist.

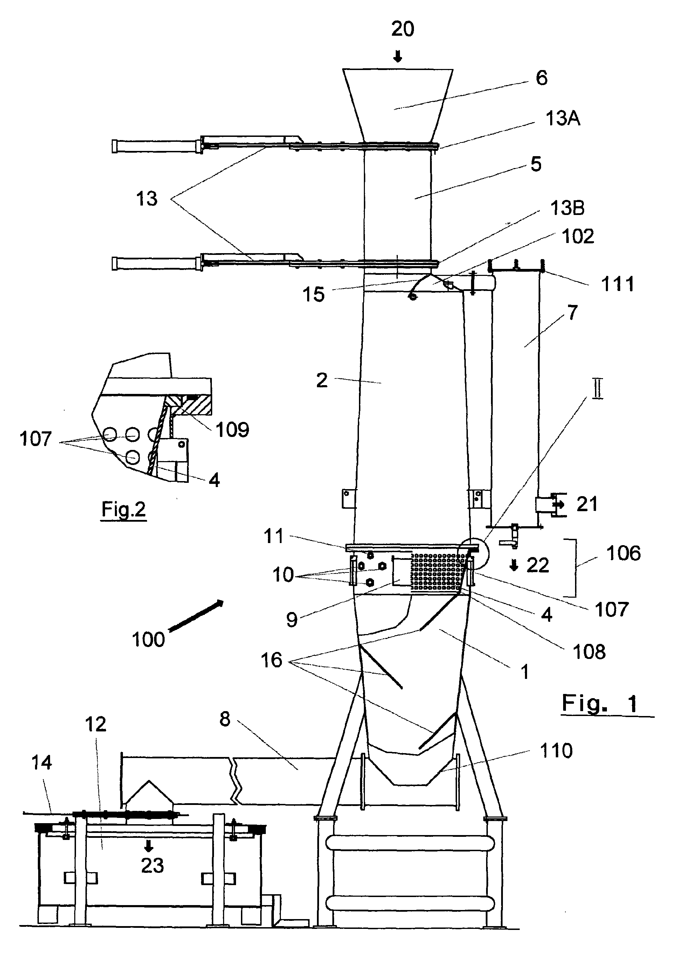

Eingelegt im Unterteil 1 im Bereich der Kohlungszone 106 ist der gelochte Korb 4 mit dem Zweck, dass die eintretende Luft gleichmässig über den ganzen Umfang verteilt über die Löcher 107 in die Kohlungszone 106 eintreten kann. Der Korb 4 ist konisch ausgeführt mit der kleineren Öffnung 108 nach unten. Der Durchmesser der oberen Öffnung des Korbes 4 ist dabei um mindestens 10 % grösser als derjenige seiner unteren Öffnung, ein in Versuchen bewährter Wert ist ca. 20 %. Durch den verringerten Querschnitt der unteren Öffnung 108 am Korb 4 wird die Verweilzeit des Kohlungsgutes im Bereich der Kohlungszone 106 verlängert. Fig. 2 zeigt vergrössert, dass der Korb 4 in eine umlaufende Vertiefung 109 des Flansches am oberen Ende des Unterteils 1 eingehängt ist.

Das Unterteil 1 verengt sich nach unten zur Verbindung 110 mit dem Fördersystem 8. Um den Druck des Kohlungsguts auf das Fördersystem 8 zu verringern und ein Durchfallen in der Mitte des Unterteils zu verhindern, sind kaskadenförmige Stufen in Form von gegenläufig schrägstehenden Leitblechen 16 im Unterteil 2 unterhalb der Kohlungszone 106 angebracht.

Über das Fördersystem 8 gelangt die Holzkohle in den luftdicht abgeschlossenen, auswechselbaren Aufnahmebehälter 12. Der luftdichte Abschluss des gesamten Reaktors 100 inklusive des Fördersystems 8 und des Aufnahmebehälters 12 dienen der genauen Kontrolle der Frischluftzufuhr zum Kohlungszone, wodurch eine genaue Steuerung des Brenn- und Kohlungsvorganges und damit seine Optimierung möglich ist. Als Fördersystem kann eines der bekannten eingesetzt werden, z. B. Kratzförderer, bei denen sich Förderzähne am Boden des Fördersystems 8 hin- und herbewegen. Die Zähne sind dabei allgemein sägezahnförmig ausgebildet mit der steileren Flanke zum Behälter 12 hin. Andere Förderer wie in der Technik an sich bekannt sind ebenfalls denkbar, wie z. B. Spiralförderer, Schneckenförderer oder eine Zellradschleuse, und auf eine detaillierte Beschreibung wird daher verzichtet.

Zur Entnahme der fertigen Holzkohle ist der Schieber 14 zu schliessen, um den luftdichten Abschluss beim Öffnen des Behälters 12 sicherzustellen. Dann kann der Behälter 12 geöffnet und entleert werden.

Das beim Kohlungsprozess entstehende Rauchgas wird im oberen Bereich über den Rauchabzug 102 des Reaktors 100 abgeführt und zum Separator 7 geleitet, wo das Holzöl ausgeschieden wird. Der für den Prozess notwendige Luftzug wird über ein Sauggebläse (nicht dargestellt) am Anschluss 21 bewerkstelligt. Dadurch wird ein geringer Unterdruck im Reaktor 100 aufrecht erhalten.

Der Separator 7 ist auch mit einer Einrichtung zu Überdrucksicherung versehen in Form eines mit Gewicht und/oder Federn belasteten Deckels 111. Im theoretisch denkbaren Fall eines Überdrucks durch eine momentane starke Gasentwicklung im Reaktor 100 wird der Überdruck durch selbsttätiges Öffnen des Deckels 111 abgeleitet.

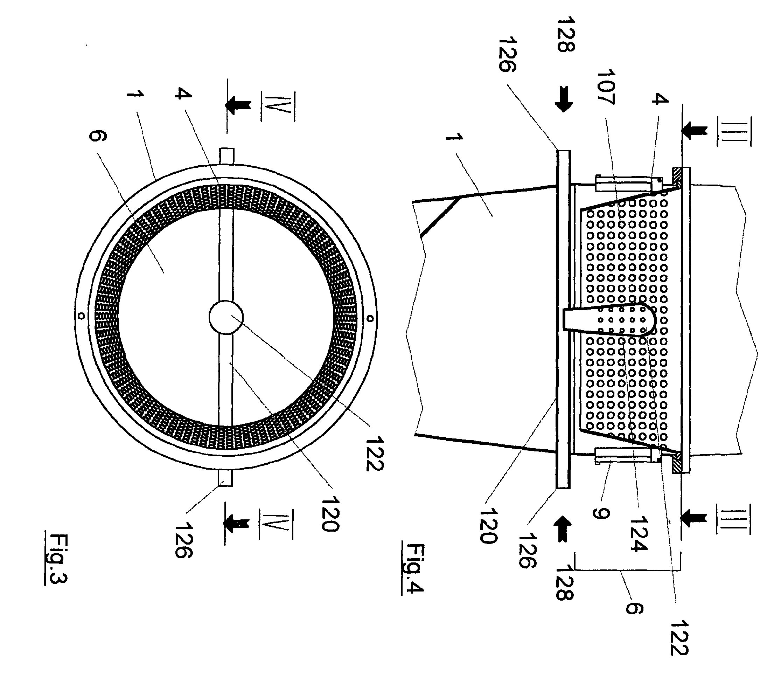

Die Figuren 3 und 4 zeigen eine Variante des Kohlungszone 106. Um auch eine Luftzufuhr in der Mitte der Kohlungszone 106 und damit eine gleichmässigere Verbrennung bzw. Verkohlung, verläuft unterhalb des Korbes 4 ein Luftrohr 120 durch das Unterteil 1. In der Mitte des Rohres ist ein keulenförmiger, hohler Körper 122 auf dem Rohr 120 befestigt. Der Hohlkörper 122 erstreckt sich in die Kohlungszone 106 hinein und ist in diesem Bereich mit Löchern 124 versehen.

Die Öffnungen 126 des Rohrs 120, in die Luft gemäss Pfeilen 128 hineinströmt, können mit Regelungseinrichtungen (nicht dargestellt) versehen sein, um den Luftzutritt regulieren zu können.

Im laufenden Betrieb ist der Reaktor mit Material gefüllt: oberhalb der Kohlungszone 6 mit Kohlungsgut, das in der Kohlungszone verbrennt und verkohlt, und unterhalb der Kohlungszone mit Holzkohle. Der Durchsatz wird damit u. a. von der Geschwindigkeit bestimmt, mit der das Fördersystem die Holzkohle transportiert.

Die optimale Prozessführung erfolgt über die Abstimmung folgender Führungsgrössen : Luftmengensteuerung über das Sauggebläse am Abluftanschluss 21, Befüllungsmenge durch den Befüllungsgrad (Füllhöhe im Oberteil 2), Temperaturverlauf in den verschiedenen Zonen und die Austrittsmenge pro Zeiteinheit. Weitere Messgrössen wie Unterdruck oder Rauchgaszusammensetzung können ebenfalls berücksichtigt werden.

Mit einem erfindungsgemässen Reaktor wurden in einem Versuchssystem bei einem Einsatz von 28 kg/h Holz 7,5 kg/h Holzkohle erhalten. In einer grösseren Anlage wurde eine Produktion von 22 kg/h Holzkohle bei einem Verbrauch von 90 kg/h Holz erzielt.

Aus der vorangehenden Beschreibung bevorzugter Ausführungsformen des erfindungsgemässen Reaktors sind dem Fachmann zahlreiche Abwandlungen zugänglich, ohne den Bereich der Erfindung zu verlassen, die durch die Ansprüche definiert ist.

Denkbar ist u. a.:
- Das Luftrohr 120 weist nur eine Öffnung auf.
- Die Löcher 10 weisen keine Regelungsvorrichtung auf, sind jedoch ausgebildet, um durch aufsteckbare oder anderweitig anbringbare Deckel, Stopfen und dergleichen verschlossen zu werden. Durch die Anzahl der verschlossenen und offenen Öffnungen wird die Luftzufuhr geregelt.
- Die Löcher 9 im Unterteil 1, die Löcher 108 in Sieb 4 und/oder die Löcher 124 im Hohlkörper 122 weisen eine andere Form als kreisrund auf. Bevorzugt sind die Löcher 108 und 124 jedoch so ausgebildet, dass sie genügend kein sind, um ein Hindurchfallen von Kohlungsgutpartikeln weitgehend zu vermeiden.
- Die Rauchgase werden direkt unter Verzicht auf einen Separator einer Verbrennung zugeführt.
- Die Schikane mit Leitblechen 16 kann insgesamt auch eine Wendel oder eine Mischform aus einer Schikane mit schrägen Blechen und einer Wendel darstellen. Bevorzugt wird dieser Teil jedoch so ausgebildet, dass kein direkter Weg von der Kohlungszone in die Transportvorrichtung besteht.
- Der Reaktor weist einen anderen als kreisförmigen Querschnitt auf, z. B. elliptisch, oval oder eckig bzw. polygonal, insbesondere quadratisch.
- Die Luftzutrittslöcher 10 sind teilweise oder insgesamt mit einem Gebläse, Pressluft oder einer ähnlichen Vorkehrung verbunden, um die Frischluft kontrolliert, insbesondere jedoch forciert in den Reaktor (100) einzuleiten.

## Patentansprüche

1. Reaktor (100) zur Erzeugung von Holzkohle in senkrechter Aufstellung des Reaktionsraumes und einem Unterteil (1) und einem Oberteil (2), wobei das Oberteil der Aufnahme von zu verkohlendem Gut, namentlich Holz, dient, **dadurch gekennzeichnet, dass** sich am oberen Ende des Unterteils eine Kohlungseinrichtung (106) befindet, die im wesentlichen eine Luftzutrittseinrichtung (10) zum Einleiten von Luft in das Reaktorinnere, ein Kohlungsinnenteil (4) mit einer Vielzahl von Durchgängen (107), die über des Kohlungsinnenteil verteilt sind, und einen freien, im wesentlichen ringförmig verlaufenden Raum zwischen Luftzutrittseinrichtung und Kohlungsinnenteil zur Verteilung der eingetretenen Luft über den Umfang des Reaktors umfasst, so dass Luft in der Kohlungszone umfangmässig im wesentlichen gleichmässig verteilt in das Kohlungsgut einleitbar ist, um eine Verbrennung mit gleichzeitiger Verkohlung wenigstens in einer Kohlungszone in der Kohlungseinrichtung unterhalten zu können.

2. Reaktor (100) gemäss Anspruch 1, **dadurch gekennzeichnet, dass** die Luftzutrittseinrichtung eine Anzahl Öffnungen (10) umfasst, die verschliessbar und/oder deren Öffnung verstellbar ist.

3. Reaktor (100) gemäss einem der Ansprüche 1 oder 2, **dadurch gekennzeichnet, dass** sich das Oberteil (2) sich in Vorschubrichtung des Kohlungsgutes erweitert, um ein Verkeilen des Kohlungsguts zu vermeiden.

4. Reaktor gemäss einem der Ansprüche 1 bis, **dadurch gekennzeichnet, dass** er im wesentlichen luftdicht geschlossen ist, so dass der Luftzutritt in das Reaktorinnere im wesentlichen über die Luftzutrittseinrichtung erfolgt.

5. Reaktor (100) gemäss einem der Ansprüche 1 bis 4, **dadurch gekennzeichnet, dass** sich im Unterteil (1) unterhalb der Kohlungszone (106) ein mit Umlenkeinrichtungen (16) versehener Raum vorhanden ist, wobei die Umlenkeinrichtungen so angeordnet sind, dass keine gerade durchgehende Fortbewegung von verkohltem Gut zum unteren Ende des Unterteils (1) möglich ist, um ein im wesentlichen über die Querschnittsfläche gleichmässiges Passieren des Kohlungsguts durch die Kohlungszone zu bewirken.

6. Reaktor (100) gemäss Anspruch 5, **dadurch gekennzeichnet, dass** die Umlenkeinrichtung eine der folgenden Massnahmen oder ein Kombination davon ist:
- eine Serie von schräg zum Zentrum des Reaktors hin abfallenden Leitflächen, die nacheinander über den Umfang regelmässig oder unregelmässig verteilt oder gegenüberstehend angeordnet sind;
- ein spiralförmig von oben nach unten verlaufendes Band.

7. Reaktor (100) gemäss einem der Ansprüche 1 bis 6, **dadurch gekennzeichnet, dass** an die untere Öffnung des Unterteils (1) eine Fördereinrichtung anschliesst, um einen Abtransport verkohlten Guts nach vorbestimmter Geschwindigkeit zu ermöglichen.

8. Reaktor (100) gemäss Anspruch 7, **dadurch gekennzeichnet, dass** die Fördereinrichtung Teil des luftdicht abgeschlossenen Teils des Reaktors ist.

9. Reaktor (100) gemäss einem der Ansprüche 1 bis 8, **dadurch gekennzeichnet, dass** im Oberteil (2) ein Rauchgasaustritt angeordnet ist, der mit einem Sauggebläse verbunden ist, so dass die Rauchgase aus dem Reaktorinneren forciert absehbar sind.

10. Reaktor (100) gemäss Anspruch 9, **dadurch gekennzeichnet, dass** vor dem Sauggebläse eine Abscheidungseinrichtung (7) angeordnet ist, um kondensierbare Anteile aus dem Rauchgas abzutrennen.

11. Reaktor (100) gemäss einem der Ansprüche 1 bis 10, **dadurch gekennzeichnet, dass** das Kohlungsinnenteil (4) sich in Wanderrichtung des Kohlungsmaterials verengt, um eine bessere Verteilung über den Querschnitt der Zuluft zu bewirken.

12. Reaktor (100) gemäss Anspruch 11, **dadurch gekennzeichnet, dass** das Kohlungsinnenteil (4) im wesentlichen die Form einer geschlossenen Fläche mit einer unteren und einer oberen Öffnung aufweist, wobei der mittlere Durchmesser der oberen Öffnung um mindestens 10 % grösser ist als derjenige der unteren Öffnung und bevorzugt ca. 20 % grösser ist.

13. Reaktor gemäss einem der Ansprüche 1 bis 12, **dadurch gekennzeichnet, dass** im Inneren des Reaktors in der Kohlungszone (106) eine zweite Luftzufuhreinrichtung angeordnet ist.

14. Reaktor (100) gemäss Anspruch 13, **dadurch gekennzeichnet, dass** die zweite Luftzufuhreinrichtung mindestens einen Hohlkörper (122) umfasst, dessen Wand mit mindestens einer Luftdurchtrittsöffnung (124), bevorzugt einer Vielzahl von Luftdurchtrittsöffnungen (124), versehen ist und dessen Innenraum über eine Leitung (120) mit der Umgebung verbunden ist, so dass sie mit Frischluft versorgbar ist.
